# EUROPEAN PATENT SPECIFICATION

(11) **EP 4 495 012 B1**
(45) Date of publication and mention of the grant of the patent: **08.07.2026**
(21) Application number: 23382730.2
(22) Date of filing: 17.07.2023
(51) Int. Cl.: B64D 37/34, B64D 41/00, F02C 7/224

(54) **CONDITIONING SYSTEM FOR AN AIRCRAFT**
KLIMATISIERUNGSSYSTEM FÜR EIN FLUGZEUG
SYSTÈME DE CONDITIONNEMENT POUR UN AÉRONEF

(43) Date of publication of application: 22.01.2025
(73) Proprietor: Airbus Operations, S.L.U., 28906 Getafe (Madrid) (ES)
(72) Inventor: CASADO MONTERO, Carlos, E-28906 Getafe, Madrid (ES); CALDERÓN GÓMEZ, Pablo Manuel, E-28906 Getafe, Madrid (ES)
(74) Representative: ABG Intellectual Property Law, S.L.

(56) References cited:
- JP-A- 2001 317 370
- US-A1- 2023 035 231
- US-A1- 2023 045 911

## Description

### FIELD OF THE INVENTION

The present invention relates to a conditioning system for an aircraft. In particular, the present invention relates to a conditioning system having a pressure accumulator connected to the heat recovery circuit and to the fuel conduct. The present invention also relates to an aircraft comprising said conditioning system.

### BACKGROUND OF THE INVENTION

Auxiliary power units, or APUs, are well known in the aeronautical technical field for being engines capable of supplying energy to functions of an aircraft that are not considered as propulsion functions. APUs are generally found in large aircrafts and located at/or near to the tail cone part of these aircrafts.

Typical APUs generally comprise a power section being the power-producing section of the APU, a load compressor section providing pneumatic power for the aircraft and a gearbox section responsible for transferring power from the main shaft of the engine to a generator for electrical power. APUs are also known for allowing an aircraft to be autonomous of the external electrical and pneumatic power sources on the ground and in-flight.

Additionally, Auxiliary Power Units in an aircraft can be used for replacing the primary engines when they are not running when said aircraft is on-ground. APUs also sustain temporal power to start the primary engines during normal operations, they can be used to replace the power generated by primary engines when failed for dispatch conditions or continuously implemented for supplying emergency power until the aircraft lands.

Known issues of hydrogen engine are based on conditioning the hydrogen fuel up to ambient temperature and correct pressure in order to feed the engine of the APU in proper conditions and, also, ensuring a secured combustion avoiding damages in the different components and conducts of said Auxiliary Power Unit. Due to its storing conditions, around 20K in the aeronautic field of technique, hydrogen is a fuel which requires particular sizing and particular operational conditions of the system consuming this type of fuel.

Also, additional known problems of using hydrogen for an engine in an aircraft is due to phase transitions since, when stored in the aircraft before feeding the engine, the hydrogen is in liquid phase. However, in order for the engine of an APU to work in optimal manners, the liquid hydrogen has to be brought through a phase transition from liquid to gas. These phase changes also requires that the system is designed and sized in such a way that hydrogen stays stable while its conditions (Temperature, Pressure, Phase etc.) is changing throughout the whole Auxiliary Power System.

However, new conditioning systems have recently been provided for allowing the recycling of heat produced by an hydrogen engine, more particularly from exhaust gases, when implemented in an aircraft and for sizing said system to the particular case of aircrafts, as well as new conditioning systems capable of maintaining the hydrogen in its optimal condition in any flight or ground operation of an aircraft.

On the other hand and concerning the hydraulic energy storage and absorption, accumulators are known in a variety of forms to perform these particular functions of storing and absorbing hydraulic energy in hydraulic circuits.

When storing energy, the accumulators receive pressurized hydraulic fluid for later use. Sometimes accumulator flow is added to pump flow to speed up a process. Other times the stored energy is kept in reserve until it is needed and may be independent of pump flow. This could be for emergency power when pump flow is not available. It could be used to hold pressure in a system when pump flow has stopped by providing fluid to compensate for leakage.

There are several ways in which accumulators are used to absorb energy. The returning flow from a large-bore cylinder may be greater than should be conducted by the plumbing. A low-pressure accumulator can receive a portion of the flow and then discharge it at an appropriate rate for the plumbing. Hydraulic fluid has a relatively high rate of thermal expansion. If a volume of fluid is confined and unable to expand or contract due to temperature changes, there could be very high pressure that could damage equipment or low pressure that could cause air bubbles in the hydraulic fluid. Accumulators can be used to absorb the expanding fluid and/or supply the contracting fluid. They also absorb and dissipate energy when used to dampen pressure pulses, reducing noise and vibration.

Accumulators are preloaded so that there will be a minimum pressure for any available fluid. The three types of preloading are weights, springs, and gas. Of the three types of accumulators, only the weighted one has constant pressure. The pressure is produced by the weight divided by the area of the supporting piston. Weighted accumulators are appealing from the perspective of circuit design but are not usually practical for mobile applications. They must be mounted vertically, they are relatively large, and they are heavy. Spring-loaded and gas-charged accumulators weigh less, take up less space, and can be mounted horizontally, although it is preferred to mount accumulators vertically.

Gas accumulators are sometimes referred to as having a gas spring. In the gas accumulator category, there are six main types: piston, noise suppressor, bellows, diaphragm and bladder.

Several systems for managing fuel and heat in aircrafts are known in the art. Document US2023/045911A1 discloses a hydrogen fuel system for an aircraft comprising a gas turbine engine and a fuel feed conduit. This conduit is defined, at least in part, by a series of components connected to the combustor of the gas turbine engine: a liquid hydrogen tank, a liquid hydrogen pump, an evaporator and an electric heat source. The pump drives fuel to the combustor, and the heat source adds heat to the flow of hydrogen passing through the evaporator. Similarly, document US 2023/035231 A1 discloses an aircraft engine with a combustor that is supplied by a hydrogen fuel system and configured to combust hydrogen and generate water vapor. In this engine, a water vapor collector receives some of the water vapor, and a condenser is in fluid communication with the collector to cool and condense some of the water vapor. A spray nozzle is in fluid communication with the condenser and is operable to spray the condensed portion of the water vapor onto a component of the aircraft engine.

Based on the new architectures that have recently been developed for conditioning systems, a reconfiguration of these conditioning systems is proposed in this invention to provide secondary safety functions to elements involved in the supply and conditioning of fuel to the APU, such as a pressure accumulator or dumper.

### SUMMARY OF THE INVENTION

The present invention provides a conditioning system according to claim 1 and an aircraft according to claim 15. In dependent claims, preferred embodiments of the invention are defined.

In a first inventive aspect, the invention provides *a conditioning system for an aircraft, the conditioning system comprising a power unit, a fuel conduct and a heat recovery circuit,*
*the power unit comprising:*
- *a fuel inlet configured to supply liquid fuel to the fuel conduct,*
- *an engine connected to the fuel conduct, and*
- *a power unit outlet configured to exhaust gases out of the engine;*
*the heat recovery circuit comprising:*
- *a working fluid, and*
- *a heat exchanger connected to the power unit outlet and being configured to transfer heat from the exhaust gases of the engine to the working fluid,*
*wherein the heat recovery circuit further comprises a pressure accumulator connected to a section of the fuel conduct, at least upstream of a fuel evaporation and heating section in the power unit, through a discharge conduct configured to discharge working fluid from the pressure accumulator and comprising a valve configured to control the working fluid input to the section of fuel conduct.*

The conditioning system of the present invention comprises a power unit. In some embodiments, the power unit is an Auxiliary Power Unit, also called APU, or any propulsion system configured for delivering power to an aircraft or any fuel cell system. In the particular embodiment of the power unit being an APU, said Auxiliary Power Unit is configured for providing standard APU functions which are to deliver electrical and pneumatic power for ground operations and flight operations. Also, the conditioning system is suitable to be installed in an aircraft.

The conditioning system further comprises a fuel conduct distributed throughout the conditioning system, including the power unit, and this fuel conduct is configured for feeding the power unit. This power unit comprises a fuel inlet through which liquid fuel is supplied to the fuel conduct, in particular, to a section of the fuel conduct that is comprised in the power unit. Additionally, the power unit comprises an engine connected at the end of the fuel conduct that is opposite to the fuel inlet; and a power unit outlet that corresponds to the exit of the exhaust gases coming from the engine.

The fuel provided to the fuel inlet in the power unit is in a liquid phase and previously stored at specific temperature and pressure conditions. In preferred embodiments, the fuel is stored at a temperature in a range from 20K to 30K. At the fuel inlet, said fuel is injected at a temperature comprised in said temperature range.

The conditioning system further comprises a heat recovery circuit comprising a heat exchanger that is in charge of recovering heat from the exhaust gases of the power unit. The heat recovery circuit also comprises a working fluid which is to be understood as the fluid being recirculated inside the heat recovery circuit. Also, the heat recovery circuit is to be considered as an independent and a closed circuit where the fuel and the working fluid never enter in direct contact or mingle.

The working fluid of the heat recovery circuit is constantly recycled and in motion, while the power unit of the conditioning system is either in operative conditions, i.e., while is running, or while the power unit of the conditioning system is not running in order to avoid that said working fluid freezes when entering in contact with the fuel conduct where the fuel is at a substantially lower temperature than the temperature of the working fluid at this specific location which is the first point of contact of the working fluid with the fuel conduct of the power unit, which is located near the fuel inlet of the evaporating means.

Advantageously, the heat recovery circuit is a heat support to the power unit and, more particularly, to the fuel conduct.

Moreover, the heat recovery circuit further comprises a pressure accumulator that is connected to the heat recovery circuit and to the fuel conduct.

Regarding to the connection of the pressure accumulator to the heat recovery circuit, advantageously the pressure accumulator absorbs and supplies working fluid volume variations in the heat recovery circuit, damps the transient pressures in the working fluid, and provides working fluid to the evaporation and heating section to compensate for leakages. These are the mainly functions of the pressure accumulator in the heat recovery circuit.

In addition, the pressure accumulator is connected to the fuel conduct, in particular, to a section of the fuel conduct that is upstream of the fuel evaporation and heating section included in the power unit. In the context of the present invention, the term "upstream" should be understood as referring to a position or towards a position closest to the fuel inlet of the power unit or the fuel inlet of the conditioning system. On the other hand, the term "downstream" should be understood as referring to a position or towards a position closest to the power unit outlet. Both terms "upstream" and "downstream" are used in relation to the direction of fuel flow.

This connection between the pressure accumulator and the section of the fuel conduct is provided by a discharge conduct that is in charge of discharging working fluid from the pressure accumulator towards the fuel of the fuel conduct. This discharging conduct comprises a valve for controlling the amount of working fluid entering the section of the fuel conduct. The provision of working fluid from the pressure accumulator to the section of the fuel conduct allows advantageously cleaning and venting the inside of the fuel conduct.

In addition, the provision of the valve in the discharge conduct advantageously allows for the necessary intake of working fluid to be able to stop the engine in the power unit.

Having a pressure accumulator in the conditioning system, being connected to the heat recovery circuit and to the fuel conduct, allows the above additional function to be carried out. Consequently, the main benefit of this additional function for the pressure accumulator is the weight savings at aircraft level due to the removal of other systems and components that were responsible for carrying out this additional function.

In a particular embodiment, *the pressure accumulator is further connected to the section of the fuel conduct, at least upstream of a fuel evaporation and heating section in the power unit, through a pressure connection configured to transfer pressure and*/*or fluid between the section of the fuel conduct and the pressure accumulator.*

This other connection between the pressure accumulator and the section of the fuel conduct is provided by a pressure connection that is able to transfer the pressure on the section of the fuel conduct to the pressure accumulator. Advantageously, the pressure connection allows keeping the pressure delta between the fuel conduct and the inside of the pressure accumulator.

Moreover, this pressure connection is also able to transfer fluid from the inside of the pressure accumulator to the section of the fuel conduct.

This additional connection, between the pressure accumulator and the section of the fuel conduct, provided by the pressure connection replaces conventional systems and their components that perform the above functions about transferring pressure and/or fluid and therefore also saves weight.

In a particular embodiment, *both discharge conduct and the pressure connection are connected to the section of the fuel conduct upstream the fuel inlet of the power unit.* In this embodiment, the section of the field conduct to which the pressure accumulator is connected is placed out of the power unit, that is, before the fluid inlet of the power inlet according to the direction in which the fuel is flowing through the fuel conduct. Advantageously, it is ensured that the whole section of the fuel conduct arranged inside the power unit remains clear of H2.

In a particular embodiment, *the pressure accumulator is one of the following types: bellows, bladder and diaphragm.*

Preferably, *the pressure accumulator is a bellows type accumulator comprising:*
- *a housing;*
- *bellows and a spring, both arranged inside the housing;*
- *a first inlet configured to supply the housing with a working fluid from a heat recovery circuit; and*
- *a second inlet configured to supply a fluid to the bellows.*

A bellows type accumulator comprises a housing that houses inside an expandable metal chamber that is pre-charged with a specific fluid, so that the housing is exposed to the high-pressure hydraulic fluid. The walls of the expandable chamber do not touch the walls of the housing, therefore there is no frictional wear as the bellows expand and retract. They do not use elastomeric bladders, diaphragms, or piston seals; therefore they are not subject to the limitations of elastomers. Metal bellows operate reliably in high temperature, extremely abrasive, and harsh environments. The welded bellows are hermetically sealed and can operate reliably without servicing or maintenance.

In addition, the bellows type accumulator comprises a first inlet for the incoming working fluid from the heat recovery circuit; and a second inlet for the incoming fluid to the inside of the bellows or the expandable chamber, and preferably expandable metal chamber. Specifically, through this second inlet the inside of the expandable chamber of the pressure accumulator is filled in.

The pressure accumulator also comprises a spring configured to advantageously secure therefore the pressure of the heat recovery circuit to be always greater than the fuel pressure.

In a particular embodiment, *the bellows type accumulator further comprises a third inlet configured to connect the pressure connection with the inside of the bellows.*

In a particular embodiment, *the pressure connection connects the pressure of the section of the fuel conduct with the fluid pressure of the bellows of the pressure accumulator through the third inlet, and wherein the pressure transfer between the section of the fuel conduct and the inside of the bellows is carried out by fluid means with a diaphragm or by mechanical means such as piston rod or rubber material.* In this embodiment, the pressure connection allows transferring the pressure of the fuel conduct to the pressure in the accumulator keeping the pressure delta between the fuel conduct and the fluid houses in the bellows of the pressure accumulator. Furthermore, the fluid means with a diaphragm advantageously avoids fuel leak to the pressure accumulator.

In a particular embodiment, *the pressure connection is a pressure conduct connecting the inside of the bellows through the third inlet with the section of the fuel conduct, and wherein the pressure conduct comprises a valve configured to control de passage of pressure and*/*or fluid between the section of the fuel conduct and the inside of the bellows.* Specifically, this valve of the pressure conduct allows to transfer pressure from the section of the fuel conduct to the inside of the bellows and allows to discharge the bellows flow into the section of the fuel conduct and vice versa. More particularly, said valve transfers pressure when is closed and fluid when is opened.

In a more particular embodiment, *the fluid supplied to the bellows through the third inlet is the same as the fuel flowing through the section of the fuel conduct.*

In another particular embodiment, the fluid supplied to the pressure accumulator through the first inlet is the same as the working fluid of the heat recovery circuit. That is, the incoming fluid to the inside of the pressure accumulator is the same as the working fluid that flows through the heat recovery circuit.

In another embodiment, the fluid supplied to the bellows through the second inlet is the same working fluid of the heat recovery circuit. This fluid supply is performed for the initial filling of the bellows and maintenance of the pressure accumulator.

In a particular embodiment, *the section of the fuel conduct comprises a main channel surrounded by a double wall volume, and wherein the fuel flows through the main channel in operational mode.* The main channel through which the fuel flows is surrounded with a double wall volume. The arrangement of this double wall volume is for safety in order to ventilate possible fuel leaks in the main channel.

More particularly, *the discharge conduct is connected to the main channel and*/*or to the double wall volume.* In this sense, the discharge conduct is able to provide working fluid both to the main channel and to the double wall volume. Since the working fluid is inert, it can be used to vent the two ducts if necessary.

In a particular embodiment, *the pressure connection is connected to the main channel and*/*or to the double wall volume.*

In a particular embodiment, *the discharge conduct comprises an outlet port that connects the pressure accumulator with the inside of a compartment where the power unit is located, and wherein the outlet port comprises a valve configured to control the working fluid input to the inside of the power unit compartment.*

Advantageously, this outlet port in the discharge conduct provides working fluid to the fuselage compartment where the power unit is placed, and also the whole conditioning system, in case of emergency, such as fire in the compartment or fuel leakage.

In a particular embodiment, *the fluid of the fuel conduct is hydrogen (H2) and*/*or the working fluid of the heat recovery circuit is Nitrogen (N2), Helium (He), or a mixture of Nitrogen (N2) and Helium (He) and*/*or ethylene glycol water (EGW).*

In some embodiments, the fluid of the fluid conduct is pure hydrogen.

In some other embodiments, the fluid of the fluid conduct is a mixture of hydrogen and fuel such as methane, propane, butane etc. In the particular case of the fluid of the fluid conduct being a mixture, hydrogen is the majority of the mixture.

In a second inventive aspect, *the invention provides an aircraft comprising a conditioning system according to the first inventive aspect.*

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic representation of the conditioning system according to an embodiment of the present invention.
- Figure 2: This figure shows a schematic view of an embodiment of the conditioning system according to the present invention.
- Figure 3: This figure shows a schematic view of another embodiment of the conditioning system according to the present invention.
- Figure 4: This figure shows a schematic view of another embodiment of the conditioning system according to the present invention.
- Figure 5: This figure shows a schematic view of an aircraft according to the present invention.

### DETAILED DESCRIPTION OF THE INVENTION

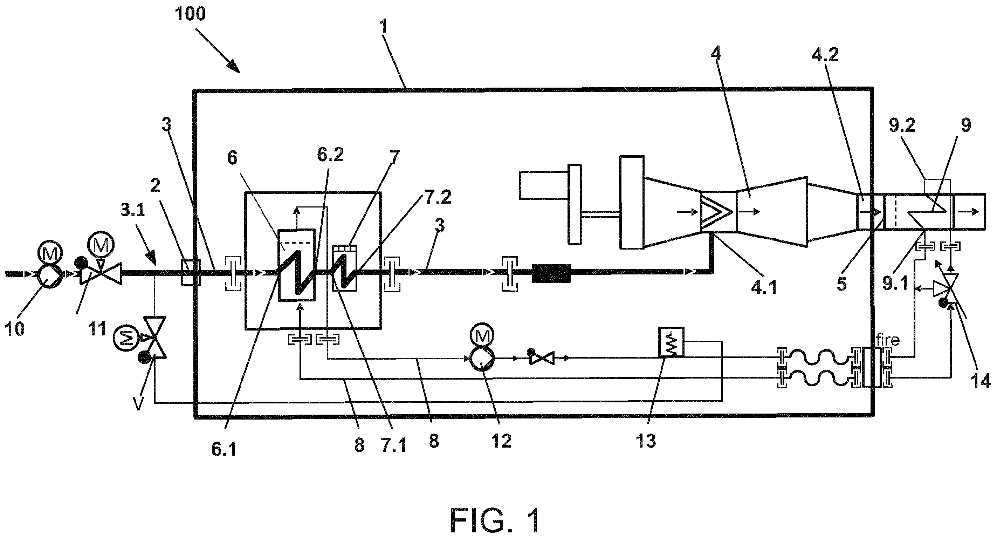

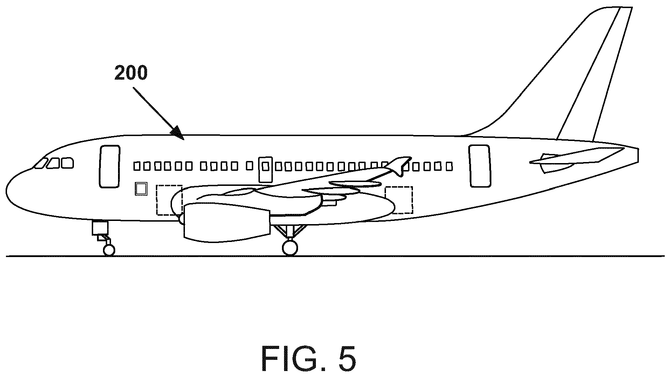

Figure 1 shows a schematic representation of a conditioning system (100) for an aircraft (200) (shown in figure 5) according to an embodiment of the invention.

In the embodiment of figure 1, the conditioning system (100) comprises a power unit (1) which comprises a fuel inlet (2), a fuel conduct (3), an engine (4), a power unit outlet (5), evaporating means (6) and heating means (7). In some embodiments, the power unit (1) is an Auxiliary Power Unit or APU. In some other embodiments, the power unit (1) is a propeller.

In some embodiments, the fuel is hydrogen. In preferred embodiments, the hydrogen is stored at 20 K, before being injected into the power unit (1), and the conditioning system (100) of the invention provides heat to the hydrogen such that the temperature of the hydrogen before entering the engine (4) is constant at 288K. Also in preferred embodiments, the fuel, preferably hydrogen, is injected in the conditioning system (100) at 1.25 MPa.

The fuel inlet (2) is configured to supply liquid fuel to the fuel conduct (3) and a section of the fuel conduct (3), which is placed in the power unit (1), connects the fuel inlet (2) to the engine (4). The engine (4) comprises an inlet (4.1) and an outlet (4.2) connected to the power unit outlet (5). The power unit outlet (5) is configured to exhaust gases out of the engine (4). In particular embodiments, the engine (4) is a gas turbine.

Then, in the embodiment of figure 1, the evaporating means (6) are connected to the fuel inlet (2) by the fuel conduct (3) and comprise a fuel inlet (6.1) and a fuel outlet (6.2). The evaporating means (6) are configured to supply heat to the fuel of the fuel conduct (3) and to turn the fuel of the fuel conduct (3) from liquid form into gas form. In some embodiments, the fuel injected into the evaporating means (6) is completely turned into gas form at the fuel outlet (6.2) of the evaporating means (6).

Also in figure 1, the power unit (1) of the conditioning system (100) also comprises heating means (7) located downstream the evaporating means (6). The heating means (7) comprise a fuel inlet (7.1) connected to the fuel outlet (6.2) of the evaporating means (6) thanks to the fuel conduct (3) and the heating means (7) also comprise a fuel outlet (7.2). The heating means (7) are configured to supply heat to the fuel of the fuel conduct (3). In particular, the heating means (7) provides additional heat to the fuel of the fuel conduct (3). The heating means (7) are considered a support to the conditioning system (100) in such a way that, when the engine is not running yet, the heat provided to the fuel of the fuel conduct (3) comes from the heating means (7) and, later when the conditioning system (100) is in full operative mode, the heat transferred from the working fluid of the heat recovery circuit (8) to the fuel of the fuel conduct (3) is covering the total heat required for heating the fuel of the fuel conduct (3) in such a way that the heating means (7) provided heat decreases until the heating means (7) can be stopped.

In some other embodiments, the heating means (7) are located upstream the evaporating means (6).

In some embodiments, the heating means (7) are provided with a dedicated battery so that the functioning of the heating means (7) is independent of the rest of elements of the conditioning system (100).

Also in some embodiments, the evaporating means (6) and the heating means (7) are encapsulated in order to avoid leakage outside the encapsulation of the evaporating means (6) and/or the heating means (7) which would damage the rest of the conditioning system (100).

Back to the embodiment of figure 1, the fuel conduct (3) connects the fuel outlet (7.2) of the heating means (7) to the inlet (4.1) of the engine (4).

In some embodiments, the fuel conduct (3) between the heating means (7) and the engine (4) is a flexible hose.

The conditioning system (100) depicted in figure 1 also comprises a heat recovery circuit (8). The heat recovery circuit (8) comprises a heat exchanger (9) in fluid communication with the evaporating means (6), and a working fluid. The working fluid is running along the whole heat recovery circuit (8) at a working fluid pressure reference value PWF.

The heat recovery circuit (8) is also configured to supply the working fluid heat from the exhaust gases of the power unit (1) to the fuel of the fuel conduct (3) by means of evaporating means (6). That is, the fuel conduct (3) of the evaporating means (6) and the heat recovery circuit (8) share common surfaces in order to transfer said heat recycled from the heat recovery circuit (8). Advantageously, the heat exchanger (9) covers the entire perpendicular cross-section of the power unit outlet in order to exploit the most heat from the exhaust gases generated the functioning of the power unit (1).

The heat exchanger (9) is connected to the power unit outlet (5) and comprises an inlet (9.1) and an outlet (9.2). The heat exchanger (9) is configured to transfer heat from the exhaust gases of the power unit outlet (5) to the working fluid located inside the heat recovery circuit (8). The heat exchanger (9) is also configured to supply the working fluid from the heat exchanger (9) to the evaporating means (6) and the evaporating means (6) are configured to supply the working fluid heat from the working fluid of the heat recovery circuit (8) to the fuel of the fuel conduct (3). According to an embodiment, the heat exchanger (9) length ensures that the pressure drop is minimized. More particularly, the heat exchanger (9) is a pillow plate heat exchanger, or PPHE.

Preferably, the heat exchanger (9) is configured for covering the whole area of the power unit outlet (5) so that the maximum heat is generated from the exhaust gases of the engine (4) and transferred to the working fluid of the heat recovery circuit (8).

The heat exchanger (9) is started-up as soon as the power unit (1) is running in order to acquire heat from the exhaust gases of the power unit outlet (5) at the earliest time, or before running the engine (4), so that the heat recovery circuit (8) provides heat to the fuel of the fuel conduct (3) by means of the working fluid and the evaporating means (6) as soon as possible, thus, aiming in shutting off the heating means (7) in the shortest time possible once the evaporating means (6) are capable of independently provide heat to the fuel of the fuel conduct (3) required for the engine (4) of the power unit (1) to reach operative conditions without support from the heating means (7). That is, when the fuel reaches a temperature between 225K and 330K.

Also preferably, the working fluid of heat recovery circuit (8) is Nitrogen (N2) or Helium (He), or a mixture of Nitrogen (N2) and Helium (He), and/or ethylene glycol water (EGW).

Also depicted in the embodiment of figure 1, the heat recovery circuit (8) comprises first pumping means (12) located downstream the evaporating means (6) which actuates over the circulation flow of the working fluid inside the heat recovery circuit (8). The functioning and control of the first pumping means (12) are independent from the engine (4). In the same embodiment, the heat recovery circuit (8) shows pressure accumulator (13) located downstream the first pumping means (12) and configured for regulating pressure of the working fluid inside the heat recovery circuit (8). Also, the first pumping means (12) help providing the minimum delta of pressure necessary for the working fluid to flow inside the heat recovery circuit (8).

In some embodiments, the pressure of the working fluid is higher than the pressure of the fluid of the fluid conduct (3).

Also in the embodiment shown in figure 1, the heat recovery circuit (8) comprises a first bypass conduct (14) configured to connect a first portion of the heat recovery circuit and a second portion of the heat recovery circuit. The first portion is located upstream the inlet (9.1) of the heat exchanger (9) and the second portion of the second conduct is located downstream the outlet (9.2) of the heat exchanger (9).

In preferred embodiments, the heat exchanger (9) is a pillow plate heat exchanger type. Pillow plate heat exchangers provide high performance in a more compact structure and lower weight than common heat exchangers while providing good structural stability.

In some other embodiments, the heat recovery circuit (8) comprises a second bypass conduct configured to connect a third portion of the heat recovery circuit (8) and a fourth portion of the heat recovery circuit (8). The third portion is located between the evaporating means (6) and the first portion of the heat recovery circuit (8), and the fourth portion of the heat recovery circuit (8) is located between the second portion of the heat recovery circuit (8) and the evaporating means (6).

In the embodiment of figure 1, the conditioning system (100) further comprises second pumping means (10) and a valve (11), both configured to supply fuel to the power unit (1). In particular, the second pumping means (10) helps maintaining pressure of fuel injection inside the power unit (1) at the inlet (2). Also, the valve (11) allows opening and closing the conditioning system (100) in case of performing maintenance or in any event requiring closing the fuel entry in the power unit (1).

Also in the embodiment depicted in figure 1, the second pumping means (10) and the valve (11) are encapsulated which avoid any leakage of fuel outside of the encapsulated area when both the second pumping means (10) and the valve (11) are considered critical elements with high risk of leakage.

In some embodiments, the fuel conduct (3) of the evaporating means (6) and the heat recovery circuit (8) are mounted in counterflow. By mounting the fuel conduct (3) and the heat recovery circuit (8) in counterflow, the conditioning system (100) improves the heat exchange between the fuel of the fuel conduct (2) and the working fluid of the heat recovery circuit (8) such that at the temperature of the working fluid is higher when in contact with the fuel outlet (6.2) of the evaporating means (6) and the temperature of the working fluid is lower in the portion of the heat recovery circuit (8) in contact with the fuel inlet (6.1) of the evaporating means (6). Advantageously, with counterflow, the delta of temperature for two corresponding points between the temperature of the working fluid and the temperature of the fuel inside the evaporating means (6) is positive which ensures optimal heat transfer from the working fluid to the fuel.

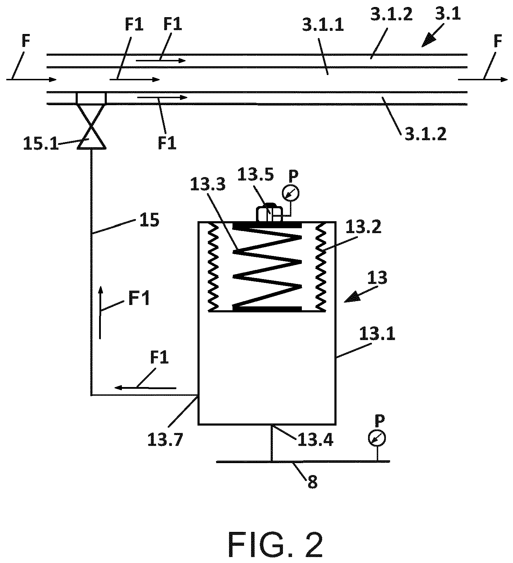

In accordance with figure 1 and in particular with the present invention, the pressure accumulator (13) is connected to a section (3.1) of the fuel conduct (3) upstream the fuel inlet (2) of the power unit (1). That is, the fuel conduct (3) is arranged along the conditioning system (100) so that part of this fuel conduct (3) being placed inside the power unit (1) y the rest of the fuel conduct (3) being placed outside the power unit (1) or upstream the fuel inlet (2) of this power unit (1). The pressure accumulator (13) is connected to the mentioned section (3.1) of the fuel conduct (3) for the fluid exchange between the pressure accumulator (13) and the section (3.1) of the fuel conduct (3) in a regular way as shown through a valve (V). The pressure accumulator (13) is connected to the fuel conduct section (3.1) as described below with reference to figures 2 to 4.

Figures 2 to 4 show a pressure accumulator (13) that is a bellows type accumulator. This pressure accumulator (13) comprises a housing (13.1) that housed inside bellows (13.2) and a spring (13.3). The pressure accumulator (13) further comprises a first inlet (13.4) that connects the housing (13.1) with the heat recovery circuit (8), thus allowing to supply the housing with working fluid from the heat recovery circuit (8). In addition, the pressure accumulator (13) also comprises a second inlet (13.5) suitable for supplying fluid to the inside of the bellows (13.2) for initial filling and maintenance of the pressure accumulator (13). Specifically on figure 2, through this second inlet (13.5) the inside of the bellows (13.2) is filled with the same working fluid of the heat recovery circuit (8).

Furthermore, the section (3.1) of the fuel conduct (3) that is shown in these figures 2 to 4 is formed by a main channel (3.1.1) and a double wall volume (3.1.2) surrounding the main channel (3.1.1). The fuel flows through the main channel (3.1.1.) in operative mode and the direction of the fuel flowing is represented with the fuel arrow (F). According to the embodiments of these figures 2 to 4, the fuel is hydrogen.

Figure 2 shows an embodiment of the pressure accumulator (13) connected to the section (3.1) of the fuel conduct (3) upstream the fuel inlet of the power unit (not shown in this figure). According to the embodiment of this figure 2, the pressure accumulator (13) is connected to the section (3.1) of the fuel conduct (3) through a discharge conduct (15) for discharging working fluid, from the inside of the housing (13.1) of the pressure accumulator (13) and coming from the heat recovery circuit (8) to the inside of the section (3.1) of the fuel conduct (3). That is, the working fluid that is already supplied to the inside of the housing (13.1) through the first inlet (13.4) and from the heat recovery circuit (8) is the fluid that is discharged from the pressure accumulator (13) through the discharge conduct (15). Specifically, the discharge conduct (15) comprises a valve (15.1) that regulates the working fluid input to the inside of the section (3.1). Furthermore, the pressure accumulator (13) comprises an outlet (13.7) that connects the inside of the housing (13.1) with the discharge conduct (15).

The discharge conduct (15) is connected to the main channel (3.1.1) and to the double wall volume (3.1.2). The discharged working fluid is represented by the first arrows (F1) in dashes as shown in figure 2. The working fluid that is discharged from the pressure accumulator (13) to the section (3.1) of the fuel conduct (3) allows venting and cleaning the inside of the section (3.1), both the main channel (3.1.1) and the double wall volume (3.1.2). In addition, the discharge of working fluid through the fuel conduct (3) allows stopping the engine (4) of the power unit (1) (not shown in figure 1).

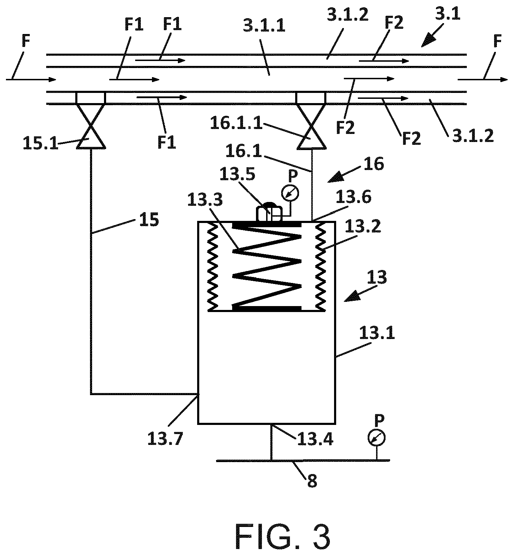

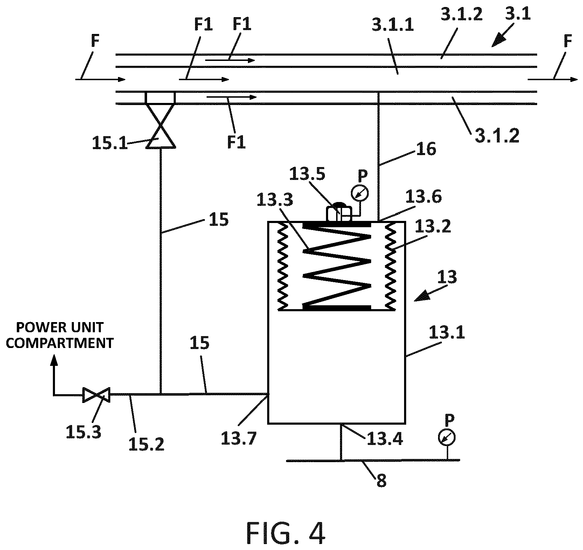

Figures 3 and 4 show embodiments of the pressure accumulator (13) connected to the section (3.1) of the fuel conduct (3) upstream the fuel inlet of the power unit (not shown in this figure). According to these embodiments, the pressure accumulator (13) is connected to the section (3.1) of the fuel conduct (3) through a discharge conduct (15) as already described above for figure 2 and also through a pressure connection (16) for transferring pressure and/or fluid between the section (3.1) of the fuel conduct (3) and the pressure accumulator (13). Both figures 3 and 4 show that the pressure accumulator (13) comprises a third inlet (13.6) that connects the pressure connection (16) with the inside of the bellows (13.2).

In the embodiment shown in figure 3, the pressure connection (16) is a pressure conduct (16.1) that connects the inside of the bellows (13.2) of the accumulator (13) through the third inlet (13.6) with the inside of the main channel (3.1.1) and/or to the double wall volume (3.1.2). This pressure connection provided by the pressure conduct (16.1) allows transferring pressure from the section (3.1) of the fuel conduct (3) to the inside of the bellows (13.2) and/or to discharge the bellows (13.2) flow into the section (3.1) of the fuel conduct (3) or vice versa. Specifically, the pressure conduct (16.1) comprises a valve (16.1.1) that controls the passage of fluid between the main channel (3.1.1) and/or the double wall volume (3.1.2) and the inside of the bellows (13.2) of the pressure accumulator (13). The discharged fluid from the bellows (13.2) is represented by the second arrows (F2) as shown in figure 3. In addition, this valve (16.1.1) may control the passage of pressure between the main channel (3.1.1) and the inside of the bellows (13.2). In a more particular embodiment, the valve (16.1.1) allows the passage of pressure when it is closed and allows the passage of fluid when it is opened. In this figure 3, the valve (16.1.1) is considered opened since fluid from the bellows (13.2) is flowing through the main channel (3.1.1) and the double wall volume (3.1.2).

Furthermore, according to the embodiment shown in figure 3, the fluid that is supplied to the inside of the bellows (13.2), through the third inlet (13.6) that connects to the pressure connection (16), is hydrogen (the same that flows through the main channel (3.1.1) of the section (3.1) of the fuel conduct (3)).

In the embodiment shown in figure 4, the pressure connection (16) allows transferring the pressure from the main channel (3.1.1) of the fuel section (3.1) to the inside of the bellows (13.2) through the third inlet (13.6). In an embodiment (not shown), the pressure connection (16) is fluid means with a diaphragm or mechanical means such as piston rod or rubber material.

The pressure exchange between the main channel (3.1.1) of the section (3.1) of the fuel conduct (3) and the bellows (13.2) of the pressure accumulator (13) allows keeping the pressure delta between the section (3.1) of the fuel conduct (3) and the fluid houses in the bellows (13.2).

Figure 4 further shows the discharge conduct (15) with an outlet port (15.2) connecting the pressure accumulator (13) with the inside of a compartment where the power unit (not shown) is located. This outlet port (15.2) has a valve (15.3) that controls the passage of working fluid from the pressure accumulator (13) towards the power unit compartment.

Figures 2 to 4 shows a pressure measurement (P) arranged at the second inlet (13.5) of the pressure accumulator (13) and being configured to monitor the pressure inside the bellows (13.2). In addition, there is another pressure measurement (P) arranged at the heat recovery circuit (8) near the first inlet (13.4) of the pressure accumulator (13) that connects the inside of the housing (13.1) with the heat recovery circuit (8). This pressure measurement (p) arranged in the heat recovery circuit (8) monitors the pressure of the working fluid flowing through the heat recovery circuit (8).

Figure 5 shows an aircraft (200) comprising a conditioning system (not shown) as any one of the embodiments described above.

## Claims

1. A conditioning system (100) for an aircraft (200), the conditioning system (100) comprising a power unit (1), a fuel conduct (3) and a heat recovery circuit (8),
the power unit (1) comprising:
- a fuel inlet (2) configured to supply liquid fuel to the fuel conduct (3),
- an engine (4) connected to the fuel conduct (3), and
- a power unit outlet (5) configured to exhaust gases out of the engine (4);
the heat recovery circuit (8) comprising:
- a working fluid, and a heat exchanger (9);
**characterized in that**:
- the heat exchanger (9) is connected to the power unit outlet (5) and is configured to transfer heat from the exhaust gases of the engine (4) to the working fluid, and
- the heat recovery circuit (8) further comprises a pressure accumulator (13) connected to a section (3.1) of the fuel conduct (3), at least upstream of a fuel evaporation (6) and heating (7) section in the power unit (1), through a discharge conduct (15) configured to discharge working fluid from the pressure accumulator (13) and comprising a valve (15.1) configured to control the working fluid input to the section (3.1) of fuel conduct (3).

2. The conditioning system (100) according to the previous claim, wherein the pressure accumulator (13) is further connected to the section (3.1) of the fuel conduct (3), at least upstream of a fuel evaporation (6) and heating section (3.1) in the power unit (1), through a pressure connection (16) configured to transfer pressure and/or fluid between the section (3.1) of the fuel conduct (3) and the pressure accumulator (13).

3. The conditioning system (100) according to the previous claim, wherein both discharge conduct (15) and the pressure connection (16) are connected to the section (3.1) of the fuel conduct (3) upstream the fuel inlet (2) of the power unit (1).

4. The conditioning system (100) according to any one of the previous claims, wherein the pressure accumulator (13) is of one of the following types: bellows, bladder and diaphragm.

5. The conditioning system (100) according to any one of claims 1-3, wherein the pressure accumulator (13) is a bellows type accumulator comprising:
- a housing (13.1);
- bellows (13.2) and a spring (13.3), both arranged inside the housing (13.1);
- a first inlet (13.4) configured to supply the housing (13.1) with a working fluid from a heat recovery circuit (8); and
- a second inlet (13.5) configured to supply a fluid to the bellows (13.2).

6. The conditioning system (100) according to any one of claims 2-3 and 5, wherein the bellows type accumulator (13) further comprises a third inlet (13.6) configured to connect the pressure connection (16) with the inside of the bellows (13.2).

7. The conditioning system (100) according to the previous claim, wherein the pressure connection (16) connects the pressure of the section (3.1) of the fuel conduct (3) with the fluid pressure of the bellows (13.2) of the pressure accumulator (13) through the third inlet (13.6), and wherein the pressure transfer between the section (3.1) of the fuel conduct (3) and the inside of the bellows (13.2) is carried out by fluid means with a diaphragm or by mechanical means such as piston rod or rubber material.

8. The conditioning system (100) according to claim 6, wherein the pressure connection (16) is a pressure conduct (16.1) connecting the inside of the bellows (13.2) through the third inlet (13.6) with the section (3.1) of the fuel conduct (3), and wherein the pressure conduct (16.1) comprises a valve (16.1.1) configured to control the passage of fluid between the section (3.1) of the fuel conduct (3) and the inside of the bellows (13.2).

9. The conditioning system (100) according to any one of claims 6-8, wherein the fluid supplied to the bellows (13.2) through the third inlet (13.6) is the same as the fuel flowing through the section (3.1) of the fuel conduct (3).

10. The conditioning system (100) according to any one of the previous claims, wherein the section (3.1) of the fuel conduct (3) comprises a main channel (3.1.1) surrounded by a double wall volume (3.1.2), and wherein the fuel flows through the main channel (3.1.1) in operational mode.

11. The conditioning system (100) according to the previous claim, wherein the discharge conduct (15) is connected to the main channel (3.1.1) and/or to the double wall volume (3.1.2).

12. The conditioning system (100) according to claim 2 and 10 and any one of claims 3-9 or 11, wherein the pressure connection (16) is connected to the main channel (3.1.1) and/or to the double wall volume (3.1.2).

13. The conditioning system (100) according to any one of the previous claims, wherein the discharge conduct (15) comprises an outlet port (15.2) that connects the pressure accumulator (13) with the inside of a fuselage compartment where the power unit (1) is located, and wherein the outlet port (15.2) comprises a valve (15.3) configured to control the working fluid input to the inside of said fuselage compartment housing the power unit (1).

14. The conditioning system (100) according to any one of the previous claims, wherein the fluid of the fuel conduct (3) is hydrogen (H2) and/or the working fluid of the heat recovery circuit (8) is Nitrogen (N2), Helium (He), or a mixture of Nitrogen (N2) and Helium (He) and/or ethylene glycol water (EGW).

15. Aircraft (200) comprising a conditioning system (100) according to any of the previous claims.

## Patentansprüche

1. Klimatisierungssystem (100) für ein Flugzeug (200), wobei das Klimatisierungssystem (100) eine Antriebseinheit (1), eine Kraftstoffleitung (3) und einen Wärmerückgewinnungskreislauf (8) umfasst,
wobei die Antriebseinheit (1) Folgendes umfasst:
- einen Kraftstoffeinlass (2), der dazu ausgelegt ist, der Kraftstoffleitung (3) flüssigen Kraftstoff zuzuführen,
- einen Motor (4), der an die Kraftstoffleitung (3) angeschlossen ist, und
- einen Antriebseinheitsauslass (5), der dazu ausgelegt ist, Gase aus dem Motor (4) abzuführen;
wobei der Wärmerückgewinnungskreislauf (8) Folgendes umfasst:
- ein Arbeitsfluid und einen Wärmetauscher (9);
**dadurch gekennzeichnet, dass**:
- der Wärmetauscher (9) mit dem Antriebseinheitsauslass (5) verbunden und dazu ausgelegt ist, Wärme von den Abgasen des Motors (4) auf das Arbeitsfluid zu übertragen, und
- wobei der Wärmerückgewinnungskreislauf (8) ferner einen Druckspeicher (13) umfasst, der durch eine Auslassleitung (15), die dazu ausgelegt ist, Arbeitsfluid aus dem Druckspeicher (13) abzulassen, und ein Ventil (15.1) umfasst, das dazu ausgelegt ist, den Arbeitsfluideingang in den Abschnitt (3.1) der Kraftstoffleitung (3) zu steuern, mit einem Abschnitt (3.1) der Kraftstoffleitung (3), zumindest stromaufwärts eines Kraftstoffverdampfungs- (6) und Heizungs- (7) Abschnitts in der Antriebseinheit (1), verbunden ist.

2. Klimatisierungssystem (100) nach dem vorhergehenden Anspruch, wobei der Druckspeicher (13) ferner durch eine Druckverbindung (16), die dazu ausgelegt ist, Druck und/oder Fluid zwischen dem Abschnitt (3.1) der Kraftstoffleitung (3) und dem Druckspeicher (13) zu übertragen, mit dem Abschnitt (3.1) der Kraftstoffleitung (3), zumindest stromaufwärts eines Kraftstoffverdampfungs- (6) und Heizungsabschnitts (3.1) in der Antriebseinheit (1), verbunden ist.

3. Klimatisierungssystem (100) nach dem vorhergehenden Anspruch, wobei sowohl die Auslassleitung (15) als auch die Druckverbindung (16) mit dem Abschnitt (3.1) der Kraftstoffleitung (3) stromaufwärts des Kraftstoffeinlasses (2) der Antriebseinheit (1) verbunden ist.

4. Klimatisierungssystem (100) nach einem der vorhergehenden Ansprüche, wobei der Druckspeicher (13) einer der folgenden Typen ist: Balg, Blase und Membran.

5. Klimatisierungssystem (100) nach einem der Ansprüche 1-3, wobei der Druckspeicher (13) ein Balgspeicher ist, der Folgendes umfasst:
- ein Gehäuse (13.1),
- einen Balg (13.2) und eine Feder (13.3), die beide innerhalb des Gehäuses (13.1) angeordnet sind;
- einen ersten Einlass (13.4), der dazu ausgelegt ist, das Gehäuse (13.1) mit einem Arbeitsfluid aus einem Wärmerückgewinnungskreislauf (8) zu versorgen; und
- einen zweiten Einlass (13.5), der dazu ausgelegt ist, dem Balg (13.2) ein Fluid zuzuführen.

6. Klimatisierungssystem (100) nach einem der Ansprüche 2-3 und 5, wobei der Balgdruckspeicher (13) ferner einen dritten Einlass (13.6) umfasst, der dazu ausgelegt ist, die Druckverbindung (16) mit dem Inneren des Balgs (13.2) zu verbinden.

7. Klimatisierungssystem (100) nach dem vorhergehenden Anspruch, wobei die Druckverbindung (16) den Druck des Abschnitts (3.1) der Kraftstoffleitung (3) mit dem Fluiddruck des Balgs (13.2) des Druckspeichers (13) durch den dritten Einlass (13.6) verbindet und wobei die Druckübertragung zwischen dem Abschnitt (3.1) der Kraftstoffleitung (3) und dem Inneren des Balgs (13.2) durch Fluidmittel mit einer Membran oder durch mechanische Mittel wie eine Kolbenstange oder ein Gummimaterial erfolgt.

8. Klimatisierungssystem (100) nach Anspruch 6, wobei die Druckverbindung (16) eine Druckleitung (16.1) ist, die das Innere des Balgs (13.2) durch den dritten Einlass (13.6) mit dem Abschnitt (3.1) der Kraftstoffleitung (3) verbindet, und wobei die Druckleitung (16.1) ein Ventil (16.1.1) umfasst, das dazu ausgelegt ist, den Fluiddurchgang zwischen dem Abschnitt (3.1) der Kraftstoffleitung (3) und dem Inneren des Balgs (13.2) zu steuern.

9. Klimatisierungssystem (100) nach einem der Ansprüche 6-8, wobei das Fluid, das dem Balg (13.2) durch den dritten Einlass (13.6) zugeführt wird, das gleiche ist wie der Kraftstoff, der durch den Abschnitt (3.1) der Kraftstoffleitung (3) strömt.

10. Klimatisierungssystem (100) nach einem der vorhergehenden Ansprüche, wobei der Abschnitt (3.1) der Kraftstoffleitung (3) einen Hauptkanal (3.1.1) umfasst, der von einem Doppelwandvolumen (3.1.2) umgeben ist, und wobei der Kraftstoff im Betriebsmodus durch den Hauptkanal (3.1.1) strömt.

11. Klimatisierungssystem (100) nach dem vorhergehenden Anspruch, wobei die Auslassleitung (15) mit dem Hauptkanal (3.1.1) und/oder dem Doppelwandvolumen (3.1.2) verbunden ist.

12. Klimatisierungssystem (100) nach Anspruch 2 und 10 und einem der Ansprüche 3-9 oder 11, wobei die Druckverbindung (16) mit dem Hauptkanal (3.1.1) und/oder dem Doppelwandvolumen (3.1.2) verbunden ist.

13. Klimatisierungssystem (100) nach einem der vorhergehenden Ansprüche, wobei die Auslassleitung (15) eine Auslassöffnung (15.2) umfasst, die den Druckspeicher (13) mit dem Inneren einer Rumpfkabine verbindet, in der sich die Antriebseinheit (1) befindet, und wobei die Auslassöffnung (15.2) ein Ventil (15.3) umfasst, das dazu ausgelegt ist, den Arbeitsfluideingang in das Innere der Rumpfkabine, in der die Antriebseinheit (1) untergebracht ist, zu steuern.

14. Klimatisierungssystem (100) nach einem der vorhergehenden Ansprüche, wobei das Fluid der Kraftstoffleitung (3) Wasserstoff (H2) ist und/oder das Arbeitsfluid des Wärmerückgewinnungskreislaufs (8) Stickstoff (N2), Helium (He) oder ein Gemisch aus Stickstoff (N2) und Helium (He) und/oder Ethylenglykolwasser (EGW) ist.

15. Flugzeug (200), umfassend ein Klimatisierungssystem (100) nach einem der vorhergehenden Ansprüche.

## Revendications

1. Système de conditionnement (100) pour un aéronef (200), le système de conditionnement (100) comprenant un groupe motopropulseur (1), une conduite de combustible (3) et un circuit de récupération de chaleur (8),
le groupe motopropulseur (1) comprenant :
- une entrée de combustible (2) configurée pour effectuer l'alimentation en combustible liquide à la conduite de combustible (3),
- un moteur (4) raccordé à la conduite de combustible (3), et
- une sortie de groupe motopropulseur (5) configurée pour effectuer l'échappement de gaz hors du moteur (4) ;
le circuit de récupération de chaleur (8) comprenant :
- un fluide de travail, et un échangeur de chaleur (9) ;
**caractérisé en ce que** :
- l'échangeur de chaleur (9) est raccordé à la sortie de groupe motopropulseur (5) et est configuré pour transférer de la chaleur depuis les gaz d'échappement du moteur (4) au fluide de travail, et
- le circuit de récupération de chaleur (8) comprend en outre un accumulateur de pression (13) raccordé à une section (3.1) de la conduite de combustible (3), au moins en amont d'une section d'évaporation (6) et de chauffage (7) de combustible dans le groupe motopropulseur (1), par le biais d'une conduite d'évacuation (15) configurée pour évacuer un fluide de travail depuis l'accumulateur de pression (13) et comprenant une soupape (15.1) configurée pour commander l'entrée de fluide de travail dans la section (3.1) de la conduite de combustible (3).

2. Système de conditionnement (100) selon la revendication précédente, dans lequel l'accumulateur de pression (13) est en outre raccordé à la section (3.1) de la conduite de combustible (3), au moins en amont d'une section d'évaporation (6) et de chauffage (3.1) de combustible dans le groupe motopropulseur (1), par le biais d'un raccord à pression (16) configuré pour transférer une pression et/ou un fluide entre la section (3.1) de la conduite de combustible (3) et l'accumulateur de pression (13).

3. Système de conditionnement (100) selon la revendication précédente, dans lequel la conduite d'évacuation (15) et le raccord à pression (16) sont tous les deux raccordés à la section (3.1) de la conduite de combustible (3) en amont de l'entrée de combustible (2) du groupe motopropulseur (1).

4. Système de conditionnement (100) selon l'une quelconque des revendications précédentes, dans lequel l'accumulateur de pression (13) est d'un des types suivants : soufflet, vessie, et diaphragme.

5. Système de conditionnement (100) selon l'une quelconque des revendications 1 à 3, dans lequel l'accumulateur de pression (13) est un accumulateur de type soufflet comprenant :
- un logement (13.1) ;
- un soufflet (13.2) et une ressort (13.3), les deux agencés à l'intérieur du logement (13.1) ;
- une première entrée (13.4) configurée alimenter le logement (13.1) en un fluide de travail provenant d'un circuit de récupération de chaleur (8) ; et
- une deuxième entrée (13.5) configurée pour effectuer l'alimentation en un fluide au soufflet (13.2).

6. Système de conditionnement (100) selon l'une quelconque des revendications 2 et 3 et 5, dans lequel l'accumulateur de type soufflet (13) comprend en outre une troisième entrée (13.6) configurée pour raccorder le raccord à pression (16) à la partie intérieure du soufflet (13.2).

7. Système de conditionnement (100) selon la revendication précédente, dans lequel le raccord à pression (16) raccorde la pression de la section (3.1) de la conduite de combustible (3) à la pression de fluide du soufflet (13.2) de l'accumulateur de pression (13) par le biais de la troisième entrée (13.6), et dans lequel le transfert de pression entre la section (3.1) de la conduite de combustible (3) et la partie intérieure du soufflet (13.2) est réalisé par des moyens fluidiques avec un diaphragme ou par des moyens mécaniques tels qu'une tige de piston ou un matériau caoutchouc.

8. Système de conditionnement (100) selon la revendication 6, dans lequel le raccord à pression (16) est une conduite de pression (16.1) raccordant la partie intérieure du soufflet (13.2) par le biais de la troisième entrée (13.6) à la section (3.1) de la conduite de combustible (3), et dans lequel la conduite de pression (16.1) comprend une soupape (16.1.1) configurée pour commander le passage de fluide entre la section (3.1) de la conduite de combustible (3) et la partie intérieure du soufflet (13.2).

9. Système de conditionnement (100) selon l'une quelconque des revendications 6 à 8, dans lequel le fluide en lequel l'alimentation est effectuée au soufflet (13.2) par le biais de la troisième entrée (13.6) est le même que le combustible s'écoulant à travers la section (3.1) de la conduite de combustible (3).

10. Système de conditionnement (100) selon l'une quelconque des revendications précédentes, dans lequel la section (3.1) de la conduite de combustible (3) comprend un canal principal (3.1.1) entouré par un volume à double paroi (3.1.2), et dans lequel le combustible s'écoule à travers le canal principal (3.1.1) en mode opérationnel.

11. Système de conditionnement (100) selon la revendication précédente, dans lequel la conduite d'évacuation (15) est raccordée au canal principal (3.1.1) et/ou au volume à double paroi (3.1.2).

12. Système de conditionnement (100) selon la revendication 2 et 10 et l'une quelconque des revendications 3 à 9 ou 11, dans lequel le raccord à pression (16) est raccordé au canal principal (3.1.1) et/ou au volume à double paroi (3.1.2).

13. Système de conditionnement (100) selon l'une quelconque des revendications précédentes, dans lequel la conduite d'évacuation (15) comprend un orifice de sortie (15.2) qui raccorde l'accumulateur de pression (13) à la partie intérieure d'un compartiment de fuselage où est situé le groupe motopropulseur (1), et dans lequel l'orifice de sortie (15.2) comprend une soupape (15.3) configurée pour commander le fluide de travail entré dans la partie intérieure dudit compartiment de fuselage logeant le groupe motopropulseur (1).

14. Système de conditionnement (100) selon l'une quelconque des revendications précédentes, dans lequel le fluide de la conduite de combustible (3) est de l'hydrogène (H2) et/ou le fluide de travail du circuit de récupération de chaleur (8) est de l'azote (N2), de l'hélium (He), ou un mélange d'azote (N2) et d'hélium (He) et/ou d'éthylène-glycol-eau (EGW).

15. Aéronef (200), comprenant un système de conditionnement (100) selon de quelconques des revendications précédentes.
